Europäisches Patentamt

European Patent Office

Office européen des brevets

Veröffentlichungsnummer: **0 282 861**

**A2**

## (12) EUROPÄISCHE PATENTANMELDUNG

(21) Anmeldenummer: 88103503.4

(22) Anmeldetag: 07.03.88

(51) Int. Cl.⁴: **B29C 45/43**

(30) Priorität: 19.03.87 DE 3708905

(43) Veröffentlichungstag der Anmeldung:
21.09.88 Patentblatt 88/38

(84) Benannte Vertragsstaaten:
CH DE ES FR GB IT LI

(71) Anmelder: **BAYER AG**
**Konzernverwaltung RP Patentabteilung**
**D-5090 Leverkusen 1 Bayerwerk(DE)**

(72) Erfinder: **Vente, Paul**
**Pregelstrasse 26**
**D-5090 Leverkusen 1(DE)**
Erfinder: **Meussdoerffer, Johann-Nikolaus, Dr.**
**Paul-Klee-Strasse 61**
**D-5090 Leverkusen 1(DE)**

(54) Verfahren zur Herstellung gespritzter Formkörper.

(57) Die vorliegende Erfindung betrifft ein Verfahren zur Herstellung von Formkörpern aus Spritzgußmaterial, bei dem die Formkörper mit Hilfe von Luft und/oder Inertgas von der Form getrennt werden und das sich insbesondere bei der Herstellung von Spritzgußteilen aus flüssigem Siliconkautschuk eignet.

EP 0 282 861 A2

## Verfahren zur Herstellung gespritzter Formkörper

Die vorliegende Erfindung betrifft ein Verfahren zur Herstellung von Formkörpern aus Spritzgußmaterial bei dem die Formkörper mit Hilfe von Luft und/oder Inertgas von der Form getrennt werden. Das Verfahren eignet sich insbesondere bei der Herstellung von Spritzgußteilen aus flüssigem Siliconkautschuk.

Die Herstellung von Spritzgußartikeln ist eine vielfach angewandte Art, Formkörper herzustellen. Als verarbeitbares Material eignet sich beispielsweise Polyethylen, Polypropylen, Polycarbonat, PVC, Polystyrol, ABS, Polyacetat HDPE, Polyterephthalat, Polyamid; sowie Siliconkautschuk (vgl. z.B. Hans Gastrow, "Der Spritzgieß-Werkzeugbau", Hanser-Verlag 1982).

In neuerer Zeit hat sich diese Technik insbesondere auch für die Herstellung von Formkörpern aus Siliconkautschuk durchgesetzt.

Ein Problem bei der Spritzgußtechnik stellt die schonende automatische Entfernung der herzustellenden Formkörper dar.

Es ist bekannt, daß bei der Entfernung von eben oder gewölbt geformten Artikeln üblicherweise aus der Matrize oder aus den Kernen Stifte ausgefahren werden können, die das Fertigteil aus der Form abheben sollen, um ein anschließendes Auswerfen zu ermöglichen. Dieser Stand der Technik hat aber einen wesentlichen Nachteil: Es ist nämlich bekannt, daß der Kautschuk, insbesondere Siliconkautschuk unter den üblichen Entformungsbedingungen bei den in der Form herrschenden hohen Temperaturen von bis zu 250°C eine sehr geringe Einreißfestigkeit und eine sehr geringe Weiterreißfestigkeit hat; dadurch ist es fast unvermeidbar, daß durch diese ausfahrenden Stifte die zu fertigenden Tile durchstoßen und damit zerstört werden. Eine zwischenzeitliche Abkühlung der Form nach der Vulkanisation zur schonenden Entformung ist aus wirtschaftlichen Gründen nicht praktikabel.

Bei anderen praktizierten Entformungsvorgängen wird manchmal noch zusätzlich über die ausfahrenden Stifte und deren Führung Preßluft eingeblasen, um die Entformung zu unterstützen. Dieses Verfahren birgt jedoch wieder zusätzliche Probleme in sich: Während des Spritzvorganges sollten die zurückgefahrenen Auswerferstifte ganz dicht mit der Führung gegen hineinfließenden, unvulkanisierten Kautschuk abgeschlossen sein, um so Überspritzungen (flash) zu vermeiden, die ansonsten ein aufwendiges Nacharbeiten der Teile zur Folge haben;

unvulkanisierter Kautschuk, insbesondere Siliconkautschuk wird nämlich bei höheren Temperaturen und besonders unter starker Scherbeanspruchung extrem niedrigviskos und kann da leicht unter Druck in alle möglichen Trennebenen und Zwischenräume einfließen. Da die Form jedoch bei Temperaturen biz zu ca. 250°C betrieben werden muß, unter diesen Bedingungen die Teile leicht gangbar bleiben müssen, muß hier überlicherweise ein unbefriedigender Kompromiß eingegangen werden Zusätzlich stellt sich beim Arbeiten mit derartig beanspruchten Teilen heraus, daß die hierbei zu verarabeitenden Kautschuke eine enorme abrasive Wirkung haben und schnell einen Verschleiß und damit eine Vergrößerung des Spiels in der Führung bewirken.

Derartige Konstruktionen ermöglichen daher allenfalls einen kurzzeitigen befriedigenden Betrieb der Anlage.

Gegenstand der vorliegenden Erfindung ist nun ein Verfahren zur Herstellug gespritzter Formkörper aus Material, das im Spritzgußverfahren verarbeitbar ist durch Einspritzen des flüssigen Materials in den Hohlraum einer entsprechenden Form, Aushärtung bzw. Reaktion des zu härtenden Materials bei erhöhter Temperatur und anschließende Trennung des Formkörpers von der Form, welches dadurch gekennzeichnet ist, daß über ein selbstnachstellendes konisches Ventil Luft und/oder Inertgas zwischen Form und Formkörper gedrückt und dadurch der Formkörper von der Form getrennt wird.

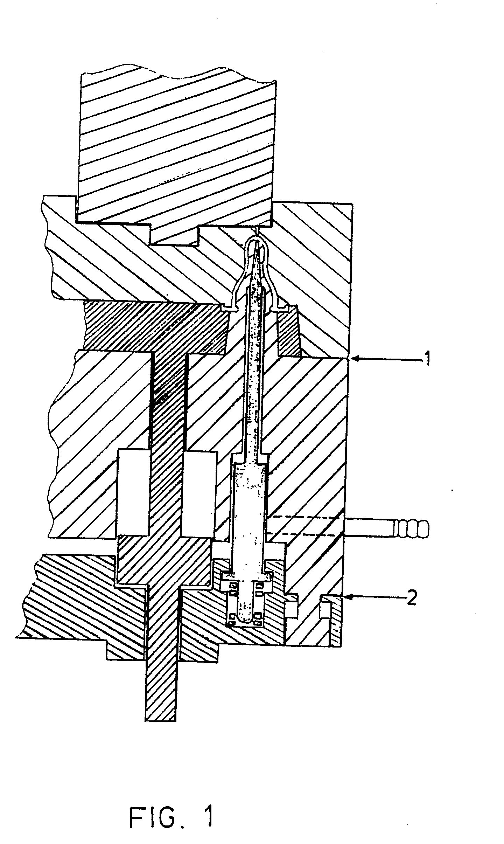

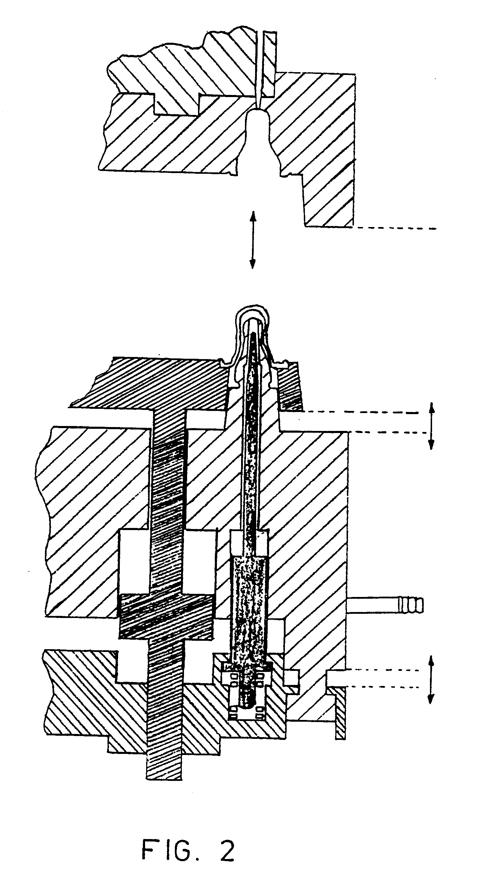

Wie aus der Fig. 1 bzw. Fig. 2 czu ersehen ist, wird hier bei diesem Verfahren an Stelle des Auswerferstiftes mit oder ohne Luftunterstützung nur ein am Ende konisch geformtes Ventil zurückgefahren, so daß nun durch einen kurzen Luft-und/oder Gasstoß während des Formöffnungsvorganges das gefertigte Teil einfach abgeblasen wird, ohne daß eine weitere mechanische Beschädigung durch Auswerferstifte möglich ist. Der konisch geformte Ventilsitz hat zudem den Vorteil, daß er über z.B. Tellerfedern stets maximal dicht an den Ventilsitz angepreßt wird und damit ein Hineinströmen des unvulkanisierten Kautschuks unmöglich ist; Abrasionseffekte durch den Kautschuk oder durch die mechanische Beanspruchung der Ventile bei den hohen Temperaturen werden dadurch automatisch stets ausgeglichen. Eine einseitige Beanspruchung der Ventile kann zusätzlich dadurch ausgeglichen werden, daß sie ähnlich wie im Kfz-Motor üblich, zwischen den einzelnen Öffnungsvorgängen um einen gewissen Grad in der Achse automatisch gedreht werden.

In den Figuren 1 und 2 haben die einzelnen Ziffern folgende Bedeutung:

1 und 2 sind die Trennebenen,
3 Kaltkanal
4 und 5 beheizte Formteile
6 Gasleitung
7 Ventil
8 Feder
9 Abstreifvorrichtung
10 = 5
11 = 9
12 Andrückplatte
13 Luft/Gas-Einlaß
14 Materialzufuhr
15 Formkörper

Der Produktionsvorgang erfolgt nun mit Hilfe der neuartigen Konstruktion folgendermaßen: Bei geschlossener Form wird z.B. über Tellerfedern das konische Ventil optimal gegen den Ventilsitz gepreßt, so daß der zu vulkanisierenden Kautschuk über ein Heißkanal-oder Kaltkanalsystem in die Form einfließen kann. Nach Vulkanisation erfolgt die Formöffnung in der Trennebene 1 (Fig. 1) und über Federpakete eine Öffnung des Werkzeuges innerhalb des Spielraumes in der Trennebene 2; durch die letztgenannte Federentlastung wird das Ventil zurückgefahren und Luft strömt unter den fertigen Artikel und bläst ihn vom Kern. Dieser Luftstrom für den Ausblas-und Ausstoßvorgang kann über kommunizierende Kanäle mit den anderen Ventilen verbunden sein oder aber über eine Programmsteuerung einzeln aufgegeben werden.

Neben den diversen Thermoplasten ist das ebenfalls im Spritzguß zu verarbeitende Elastomer LSR (Liquid Silicone Rubber) von einer beachtlichen technischen Bedeutung geworden.

Unter LSR wird ein flüssiger Zweikomponenten-Siliconkautschuk verstanden, der nach Mischen der beiden Komponenten im Verhältnis 1:1 durch den vorhandenen Platinkatalysator bei höheren Temperaturen vulkanisiert; die Vulkanisation beruht hier auf dem additionsvernetzenden Prinzip und erfolgt bei Temperaturen von ca. 100°C bis 230°C innerhalb kürzester Zeit.

Die Vulkanisate zeichnen sich durch folgende Eigenschaften aus, wie hohe Wärmebeständigkeit, gute Tieftemperaturbeständigkeit und Kälteflexibilität, gute gummimecha nische Eigenschaften, hervorragendes Alterungsverhalten, ausgezeichnetes dielektrisches Verhalten und insbesondere physiologische Indifferenz. Der schwerentflammbare Siliconkautschuk schmilzt nicht beim Verbrennen und entwickelt keine giften Gase.

Beispiele für die Anwendung von LSR finden sich im Fahrzeug-und Maschinenbau, in der Elektrotechnik und Elektronik, im Haushaltsbereich oder im Pharmasektor.

Die in der vorgenannten Erfindung beschriebene Abblasvorrichtung wird insbesondere bei allen Artikeln angewandt, die Hohlkörpern, Membrankappen, Babysaugern, Hülsen u.ä. gleichen; unabhängig von dieser Aufzählung kann dieses Prinzip der Abblasung auch bei allen anderen Formen eingesetzt werden.

**Ansprüche**

1. Verfahren zur Herstellung gespritzter Formkörper aus Material, das im Spritzgußverfahren verarbeitbar ist, durch Einspritzen des flüssigen Materials in den Hohlraum einer entsprechenden Form, Aushärtung bzw. Reaktion des gespritzten Materials bei erhöhter Temperatur und anschließende Trennung des Formkörpers von der Form, d.h., daß über ein selbstnachstellendes konisches Ventil ein Inertgas und/oder Luft zwischen Form und Formkörper gedrückt und dadurch der Formkörper von der Form getrennt wird.

2. Verfahen nach Anspruch 1, dadurch gekennzeichnet, daß als Spritzgußmaterial flüssiger Siliconkautschuk eingesetzt wird.

FIG. 1

FIG. 2